(19) Europäisches Patentamt
European Patent Office
Office européen des brevets

(11) Publication number: **0 242 469**
**A1**

# (12) EUROPEAN PATENT APPLICATION

(21) Application number: **86303063.1**

(22) Date of filing: **23.04.86**

(51) Int. Cl.⁴: **H04N 5/16**, H04N 7/167

(43) Date of publication of application:
**28.10.87 Bulletin 87/44**

(84) Designated Contracting States:
**AT BE CH DE FR GB IT LI LU NL SE**

(71) Applicant: **AMERICAN TELEVISION & COMMUNICATIONS CORPORATION**
**160 Inverness Drive West**
**Englewood Colorado 80112(US)**

(72) Inventor: **Baxes, Gregory A.**
**4896 South Dudley Street, No. 4-9**
**Littleton Colorado 80123(US)**

(74) Representative: **Hartley, David et al**
**c/o Withers & Rogers 4 Dyer's Buildings**
**Holborn**
**London, EC1N 2JT(GB)**

## (54) Video scrambling system with line tilt correction.

(57) A method and apparatus for correcting line tilt in a video signal is provided. First and second amplitude reference levels of predetermined amplitudes are added to selected time-spaced portions of the video signal. When the signal is received, the levels are measured and the difference between their amplitudes, along with the spacing between them, is used to calculate the line tilt rate and to add in an inverse line tilt function to eliminate the line tilt. This technique can be used in a line segmentation scrambling scheme to eliminate line tilt-induced reconstruction artifacts.

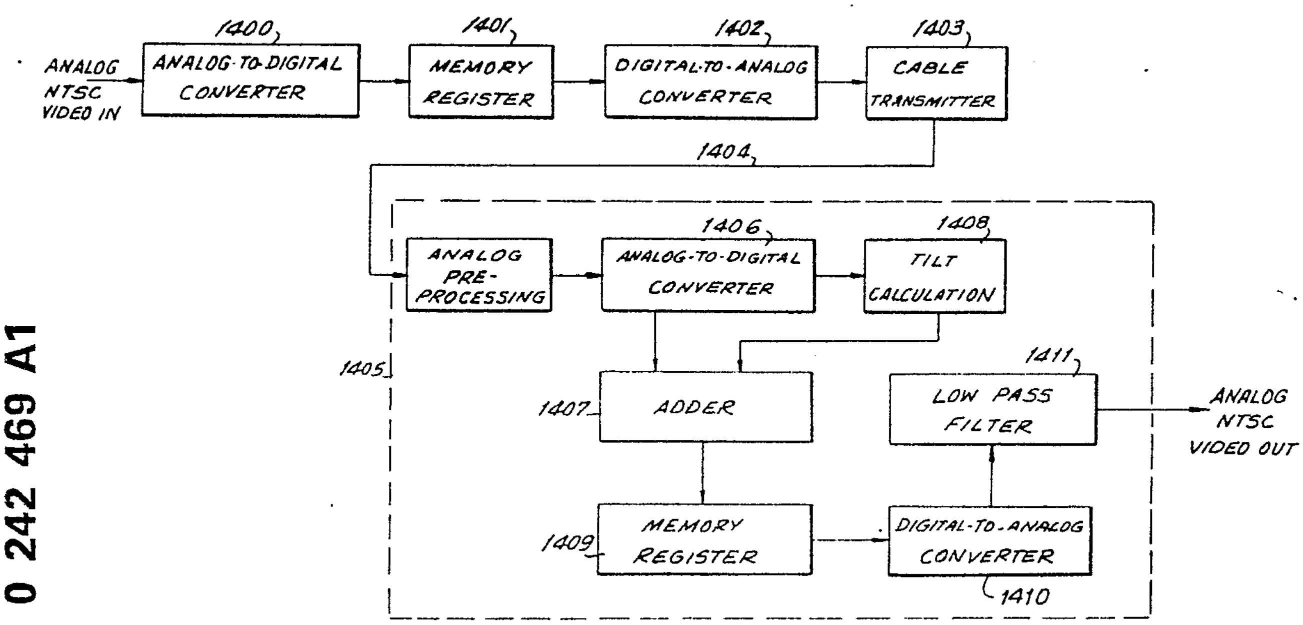


FIG. 14

EP 0 242 469 A1

Xerox Copy Centre

# VIDEO SCRAMBLING SYSTEM WITH LINE TILT CORRECTION

## Background of the Invention

This invention relates to a system for correcting line tilt in a transmitted video signal after reception, and particularly to a video scrambling system including line tilt correction.

When a video signal is transmitted, either by over-the-air broadcast or by a cable television system, it experiences a decay of the DC level of its luminance component known as "line tilt." This line tilt is an exponential function with a long time constant, so that it can be approximated as linear over long periods. The function itself also remains constant over long periods, and is not noticeable when viewed on a standard television receiver.

With the advent of cable television systems, it has become necessary to be able to encode cable transmissions to prevent unauthorized reception. One technique which can be used to encode a video signal is called "line segmentation," "line spinning," "line rotation" or "line dicing." In this techique, each video line is cut before transmission at a random point and the pieces of the line before and after that point are swapped. The segmented line is transmitted with an encoded key to the location of the cut point, enabling a specially equipped receiver to again swap the pieces of the signal to reconstruct the line.

Line segmentation is a relatively secure method of encoding a video signal. Unfortunately, it has not heretofore been practical because of line tilt. Although line tilt is not visible when a signal which has not been scrambled is being viewed, it is very visible as discontinuity in luminance across the screen when a reconstructed segmented transmission is viewed. This is so because the points at the beginning and the end of the transmitted video line, which are the points which differ most in luminance because of line tilt, end up next to each other in the middle of the line when the signal is reconstructed.

## Summary of the Invention

It is therefore an object of this invention to provide a method and an apparatus for correcting line tilt in a video signal.

It is also an object of the invention to provide a method and apparatus for encoding and decoding a video signal by line segmentation and eliminating the effects of the line tilt.

In accordance with this invention a method is disclosed for correcting line tilt in a video signal. The method includes the steps of adding first and second amplitude reference levels of equal amplitude to time-spaced portions of the video signal, transmitting the video signal thereby inducing line tilt therein, receiving the signal, sampling the amplitude reference levels in the received signal, calculating the rate of line tilt based on the difference between the amplitudes of the first and second amplitude reference levels as received, and correcting the received signal based on the rate of line tilt. In an encoding and decoding method, the signal is scrambled by line segmentation prior to transmission and reconstructed based on the line tilt rate.

The apparatus of the invention includes means for adding amplitude reference levels of equal amplitude to time-spaced portions of a video signal, means for transmitting the signal, means for receiving the signal, means for sampling the first and second amplitude reference levels as received, means for calculating the rate of line tilt based on the difference between the amplitudes of the first and second amplitude reference levels, and means for correcting the received signal based on the rate of line tilt. In encoding and decoding apparatus, there are also means for scrambling the signal by line segmentation before transmission and means for reconstructing the signal based on the rate of line tilt.

## Brief Description of the Drawings

The above and other objects and advantages of the invention will be apparent after consideration of the following detailed description, taken in conjunction with the accompanying drawings, in which like reference characters refer to like parts throughout, and in which:

FIG. 1 is a representation of a video signal including several lines;

FIG. 2 is a representation of a single video line signal;

FIG. 3 is a representation of the signal of FIG. 2 after line segmentation;

FIG. 4 is a schematic representation of a video line signal before transmission;
FIG. 5 is a schematic representation of the signal of FIG. 4 after transmission with line tilt;
FIG. 6 is a schematic representation of the signal of FIG. 5 after decoding;
FIG. 7 is a representation of an inverse line tilt ramp for the signal of FIG. 5;
FIG. 8 is a representation of the signal of FIG. 3 after transmission;
FIG. 9 is a representation of the signal of FIG. 8 after decoding;
FIG. 10 is a representation of the signal of FIG. 3 with added reference levels;
FIG. 11 is a representation of the signal of FIG. 10 after transmission;
FIG. 12 is a representation of the signal of FIG. 11 after decoding;
FIG. 13 is a representation of the signal of FIG. 2 broken down into digital segments;
FIG. 14 is a block diagram of the apparatus of the invention;
FIG. 15 is a schematic diagram of the line tilt correction circuit of the apparatus of FIG. 14;
FIG. 15A is a schematic diagram of an alternative embodiment of the apparatus of FIG. 14;
FIG. 16 is a flowchart of the algorithm used in the circuit of FIG. 15; and
Figs. 17A and 17B show alternate methods of correcting line tilt in a decoded signal according to this invention.

## Detailed Description of the Invention

A standard video signal includes 525 lines per frame, divided into two "fields" of 262.5 lines. One field includes all odd-numbered lines while the other includes the even-numbered lines. Each field begins with a vertical blanking interval containing vertical synchronization data which cause the receiver raster scan to return to the upper left-hand corner of the screen.

Each field contains 262.5 horizontal line signals. Each horizontal line signal begins with a horizontal blanking interval containing horizontal synchronization data which cause the raster scan to return to the left-hand edge of the screen. The horizontal blanking interval also includes color reference data. The remainder of the horizontal line signal is the actual video information portion containing the luminance and chrominance information for each point in the line.

Such a video signal 10 is shown in FIG. 1, which depicts a vertical blanking interval 11 surrounded by the end of one field 12 and the beginning of active portion 13 of the field of which vertical blanking interval 11 is a part. Vertical blanking interval 11 includes vertical synchronization pulses 14. Fields 12, 13 include horizontal line signals 15, each having a horizontal blanking interval 16 and a video information portion 17. As shown in FIG. 1, field 12 in an even field and field 13 is an odd field. In the case of a vertical blanking interval between the end of an odd field and the beginning of an even field, the horizontal line signals immediately before and after the vertical blanking interval are half-line signals.

A single horizontal line signal 15 is shown in FIG. 2 in inverted form (positive-going video information portions 17 with negative-going horizontal blanking interval 16, rather than the reverse as shown in FIG. 1) for ease of illustration. Horizontal blanking interval 16 includes front porch 20 (actually part of the previous line), horizontal synchronization pulse 21, and back porch 22 including color reference burst 23.

Horizontal line signal 15 can be encoded by line segmentation by randomly selecting a point 24, dividing video information portion 17 into two segments 25, 26. Interchanging segments 25, 26 produces the encoded line 30 shown in FIG. 3. In line 30, horizontal blanking interval 16 is unchanged, but the time positions of segments 26, 25 are interchanged in the encoded video information portion. Such a signal can be decoded at the receiving end using a key, which is transmitted in encoded form, giving the location of point 24. In most schemes, point 24 varies in each line. The location of the points 24 for each line in a field can be transmitted in encoded form during the vertical blanking interval for that field. The locations can also be transmitted in other ways such as over a dedicated land line, or by telephone. The receiver is programmed with the cipher for decoding the encoded locations of points 24.

Line segmentation as illustrated in FIGS. 2 and 3 has not been a practical means of encoding a video transmission because of line tilt. FIG. 4 shows a schematic representation of a video line 40. For ease of illustration, line 40 is shown having a video information portion of constant luminance level 41. Line 40 has been segmented at point 42 into segments 44, 43, although because of its constant amplitude, it appears the same as before segmentation.

FIG. 5 shows line 40 in its transmitted, tilted form 50 in which the DC level has dropped from level 51 to level 52 over the duration of the visual information portion of the line. The effect on a non-constant video line signal would be the same, in that the average DC level of the line would tilt. As can be seen in FIG. 5, the rate of line tilt is constant over the period of a video line which is approximately 63 microseconds and in fact is constant over long periods. When it does change, it is very slowing varying.

FIG. 6 shows line 50 after decoding into line 60 without correction of line tilt. Because the points which were at opposite ends of line 50 are adjacent in the video information portion of line 60, there is a line tilt-induced sawtooth 61 in line 60 which, when viewed on a television receiver, causes unacceptable artifacts in the picture.

In accordance with this invention, sawtooth 61 is eliminated, allowing the use of line segmentation as an encoding scheme, by correcting the line tilt of received line 50 before it is decoded. This is done by reserving portions 45, 46 at the beginning and end of the video information portion of line 40 before it is encoded. When the line is encoded, only that portion between, but not including, the reserved portions is segmented. After the line is segmented, the points at the beginning and end of the segmented portion are equal in amplitude, because they were adjacent one another in the unsegmented line. The information in reserved portions 45, 46 is then replaced with a constant level at the amplitude of those two points, forming first and second amplitude reference levels of equal amplitude in portions 45, 46 of the signal. These reference levels are not visible in line 40 because it is of constant amplitude, but they occupy areas 45, 46 of the video information portion. The line is then transmitted, and when it is received the reference levels are measured. First amplitude reference level 45 will have a first reduced value, while second amplitude reference level 46 will have a second reduced value. Based on the knowledge that line tilt is approximately linear, and that levels 45, 46 were equal before line tilt, the amount of line tilt can be calculated, generating the DC inverse line tilt ramp signal 70 shown in FIG. 7. Ramp signal 70 is added to line 50 before decoding to eliminate line tilt, thereby eliminating sawtooth 61 in line 60. The method of the invention will work if first and second amplitude reference levels of unequal amplitude are used, as long as there is a predetermined relationship between them. This method can also be used to correct line tilt even where there is not line segmentation or any other form of encoding.

The addition of reference levels 45, 46 to line 40 causes the loss of that part of the video information portion on which levels 45, 46 are impressed. Each reference level occupies 0.5 microsecond so that a total of 1 microsecond, or approximately 2%, of the video information portion is lost. However, a standard television receiver has an approximately 5% overscan, so that the lost portion is never visible even in a normal transmission.

The method of the invention also eliminates another problem which arises when a video signal is encoded by line segmentation. When a signal such as video line 30 in FIG. 3, which has a video information portion 31 with sharp corners 32, 33, is transmitted, a phenomenon known as roll-off or ringing occurs because of the finite rise time of the signal. Roll-off has the effect of rounding off corners 32, 33 as seen at 81, 82 of FIG. 8 showing transmitted form 80 of line 30. If the line is not segmented, these rolled off portions are in the overscan portion of the video line and are never seen. However, as shown in FIG. 9, roll-off can cause a dip 91 in a signal 90 which has been decoded from a segmented signal such as line 80 because the rolled-off portions 81, 82 at the ends of the video information portion of line 80 originate in the middle of line 30 and end up in the middle of line 90.

When reference levels are added to a video line signal according to this invention, they are made long enough in duration so that all roll-off occurs during the portion of the signal containing the reference levels, and so that there is sufficient additional time for a measurable portion of the reference level to be present. Because only that portion of the video line between the reference levels is decoded, dip 91 does not occur. This is illustrated in FIGS. 10-12. Line 100 of FIG. 10 is line 30 with reference levels 45, 46 added. Line 110 of FIG. 11 is line 100 after transmission. As can be seen at 111, 112, roll-off has occurred, but it is outside active video region 113 and detectable portions of levels 45, 46 remain. Line 120 of FIG. 12 is the result of decoding line 110. There is no dip and although video information is lost at 121, 122, those regions are outside active region 113.

The method of the invention is preferably carried out using digital techniques. In a preferred embodiment depicted in FIG. 14, the line signal to be encoded is passed through a conventional analog-to-digital converter 1400 which converts the signal to 910 8-bit values as shown in FIG. 13. The 910 values are then read into a 910 position conventional memory register 1401. The signal is encoded by reading out values 0-141 to digital-to-analog converter 1402, followed by values from a random point to value 881, then from value 142 to the random point, and then from value 882 to value 909. The values in positions 135-141 are then each replaced with the value now in position 142, which is first amplitude reference level 45, and the values in positions 882-888 are each replaced with the value now in position 881, which is second amplitude reference level 46. Reference levels 45, 46 are equal because points 142 and 881 were adjacent in the unscrambled signal, so they have the same value. In this preferred embodiment, the line signal is then transmitted over cable sys tem 1404 by transmitter 1403 in its encoded analog form, although the invention applies equally to other forms of transmission, including over-the-air broadcast.

The line signal is received by cable receiver 1405 which carries out standard analog preprocessing, such as tuning, demodulation, synchronization extraction and color burst extraction, and also derives a signal at four times the color subcarrier frequency --i.e., 4 x 3.579545 $MH_z$ = 14.31818 $MH_z$ --to be used as a sample clock for the digital portion of the apparatus. The analog signal then passes through analog-to-digital converter 1406 which is clocked at the sample rate. Analog-to-digital converter 1406 produces a digital signal having 910 samples each assigned an 8-bit value (0-255). Typically, converter 1406 is a conventional TRW TDC-1048 8-bit analog-to-digital converter, or equivalent. The digital signal is then fed both to one set of inputs of an 8-bit adder 1407 and to tilt calculation circuit 1408. Tilt calculation circuit 1408 computes the inverse tilt ramp of FIG. 7 and feeds it to the other set of inputs of adder 1407. Adder 1407 sums the digital signal and the inverse tilt ramp to produce a tilt-corrected digital signal. The inverted signal is then decoded by being read by a 910 position memory register 1409 similar to register 1401 being read out in the proper order. Conventional digital-to-analog converter 1410 restores the signal to analog form and it is then passed through a conventional low-pass filter 1411 to reconstruct it for use by a television receiver.

Adder 1407 and tilt calculation circuit 1408 are shown in more detail in FIG. 15. 8-bit adder 1407 is in practice two 4-bit adders 1500, 1501 and a latch 1502. Adders 1500, 1501 are typically 74F283 adders or equivalent. Latch 1502 is typically a 74ALS374 latch or equivalent. Latch 1502 is clocked by the sample clock so that the data are released at the proper rate. In addition, if at any time the inputs to adders 1500, 1501 sum to a value over 255, a carry condition is present in which it is required to force the output to 255. Therefore, the carry-out terminal of adder 1501 is connected to the output enable terminal of latch 1502, so that in an overflow condition, the output of latch 1502 is disabled, allowing pull-up resistors 1503 to pull all outputs to high.

Tilt calculation circuit 1408 has as its principal elements a microprocessor 1504, three latches 1505, 1506, 1507 and a 2K x 8-bit random access memory device 1508. Microprocessor 1504 is typically an Intel 8748 or equivalent, and is usually already a part of the overall cable subscriber control box. Latches 1505, 1506, 1507 are typically 74ALS374 latches or equivalents, and random access memory device 1508 is typically a Toshiba 2018D-45 or equivalent.

The video signal is continually monitored by latches 1505, 1506. A clock pulse is sent to latch 1505 at sample 885, in the center of second amplitude reference level 46, so that latch 1505 holds that value. A similar pulse is sent to latch 1506 at sample 139, in the center of first amplitude reference level 45, so that latch 1506 holds that value. Microprocessor 1504 samples these values periodically, as discussed below, and calculates the difference between them to obtain the absolute value of the excursion caused by tilt over the entire video line. Knowing that line tilt is approximately linear, and knowing the number of samples between the reference levels, microprocessor 1504 then calculates inverse line tilt ramp 70 in terms of 910 discrete points. These 910 values are read into random access memory 1508 to serve as a look-up table (LUT). When the LUT is being loaded into memory 1508, memory 1508 is output-disabled and write-enabled by microprocessor 1504, which then supplies a tilt correction value and an address (0-909) indicating the sample point to which the correction value applies. When the LUT is not being loaded into memory 1508 by microprocessor 1504, memory 1508 is output-enabled and write-disabled, and a sample counter driven by the sample clock supplies the address of the current sample point, causing memory 1508 to supply the appropriate correction value. The correction value is inputted to latch 1507 and outputted to adder 1407 at the correct time as determined by the sample clock.

Microprocessor 1504 can be programmed to update the LUT continually, or only at certain specified times. Because line tilt is a very slowly varying function, remaining constant over a long period, updates are typically only done approximately every 10 minutes, and on any "hard-reset" condition such as a power-on or channel change condition (line tilt is different for every channel). Preferably, to avoid artifacts in the picture caused by the LUT loading signals themselves, the LUT is loaded during vertical blanking intervals. In fact, because it takes approximately one-tenth of a second to load the LUT, line tilt is uncorrected, or improperly corrected, during that time. However, because of the slowly varying nature of the line tilt, these effects are not noticeable.

A flowchart of the microprocessor software for calculating the LUT values is shown in FIG. 16. After the second amplitude reference interval is passed, as determined at 1601, the two amplitude reference levels are read as at 1602 and 1603 and the absolute difference is calculated as at 1604. Preferably, because line tilt is a slowly varying function, this difference is averaged as as 1605 with several recent previous values calculated since the last hard reset to eliminate noise. The number of samples between the reference intervals is then loaded as at 1606 and the inverse line tilt ramp is calculated.

The line tilt ramp can be approximated as a straight line having a slope equal to the quotient of the absolute reference level difference and the number of samples between reference intervals. However, the video sample values are digitized to 8-bit resolutions (0-255) and the average absolute reference level difference is only on the order of 10. Therefore, there is not enough resolution to generate a straight line and instead the line tilt ramp is approximated by a step function which is generated using repeated subtraction instead of division. The absolute reference level difference is subtracted from the number of samples between reference intervals until zero is reached, as at 1607. The number of subtractions necessary to reach zero is the number-of-samples-per-LUT-value-increment, n. When writing out the LUT values into memory 1508, as at 1608, microprocessor 1504 first writes out zero, as at 1609. After every n LUT values are loaded, the value written out is increased by one for another n LUT values, repeating until the absolute reference level difference has been written into the last n LUT values, as at 1610-1612. A listing of the software program used in microprocessor 1504 to implement the flowchart of FIG. 16 is included as an appendix.

An alternative method of calculating the step function would be to use a counter which simply increases by one the correction value supplied to adder 1407 every n samples, without using a look-up table. This method could only be used where the line tilt function is approximately linear. A circuit for implementing such a method is shown in FIG. 15A, where conventional 9-bit latch 1509 is loaded with the value n by microprocessor 1504, and 9-bit counter 1510 increments 8-bit counter 1511 every n samples. The value in 8-bit counter 1511 is clocked out by the sample clock, as above.

Although in the preferred embodiment described above, an approximately linear line tilt function is being corrected, the method and apparatus of the invention can be used to correct nonlinear distortion by changing the way in which the LUT values are calculated. Further, it is not necessary that the amplitude reference intervals be located at the beginning and end of the signal. Although it may cause loss of information, the reference levels can be placed at any two time-spaced points in the video signal. They need not even be placed in the video information portion of a line signal, but could be placed in the vertical or horizontal blanking intervals. The line tilt could still be calculated, using standard mathematical techniques for determining the slope of a line connecting two points, as long as the time interval between the reference intervals is known. Similarly, if the first and second amplitude reference levels are given unequal values with a predetermined ratio between them, line tilt could be calculated by factoring in that ratio, which would be known to the receiver.

In the encoding/decoding method described above, line tilt is removed from the received signal before it is unscrambled. It is possible to implement a scheme according to this invention in which the signal is first unscrambled and the line tilt-induced reconstruction artifacts are then removed. For example, as shown in FIG. 17A, by calculating the rate of line tilt as described above, segment 171 of line 170 can be raised to position 172 to eliminate sawtooth 173. Alternatively, segment 174 could be lowered (not shown). However, a disadvantage of such a scheme is that either the highest amplitude point of the DC level of the signal may be above the highest point in the received signal, or the lowest point may be below the lowest point in the received signal. Therefore, in the alternative shown in FIG. 17B, segment 171 is raised to position 175 to eliminate part of sawtooth 173, and segment 174 is lowered to position 176 to eliminate the remainder. The signal thus produced is identical to the line-tilted signal that would have been received if the line were not scrambled.

Thus, a method and apparatus are provided for removing line tilt from a received video signal, which method and apparatus can be used in the context of a line segmentation video scrambling system. One skilled in the art will recognize that the inventive principles disclosed herein can be practiced by other than the embodiments described, which are presented for the purposes of illustration and not of limitation, and the present invention is limited only by the claims which follow.

# APPENDIX

```
;#6 EASE TILT CORRECTION ROUTINE FOR 8748
;
;EASE VIDEO ENCODING PROJECT
;ATC RESEARCH & DEVELOPMENT DEPT., COMM. SERVICES GROUP
;GREGORY A. BAXES
;4/3/1985
;(C) 1985 AMERICAN TELEVISION AND COMMUNICATIONS CORP.
;
;
;*****************************************************************
;*****************************************************************
;
;THIS ROUTINE GENERATES THE TILT CORRECTION LOOK-UP TABLE FOR
;THE ATC R&D EASE VIDEO ENCODING (SCRAMBLING) SYSTEM.
;
;THE BASIC FLOW IS AS FOLLOWS:  -------    1)8748 INITIALIZATION,
;2)TILT REFERENCE MEASUREMENT FROM EASE SYSTEM, 3)AVERAGES THE REFERENCE
;DIFFERENCE WITH PREVIOUS 15 VALUES, 4)TILT CALCULATION FROM REFERENCE
;MEASUREMENTS, 5)CALCULATE NUMBER OF SAMPLES BETWEEN LUT VALUE INCREMENT,
;6)OUTPUT LUT VALUES TO EASE SYSTEM LUT, 6)LOOP BACK TO START.
;
;IT IS IMPORTANT TO NOTE THAT THIS ROUTINE MAKES CONTINUOUS TILT
;MEASUREMENTS AND CORRECTIONS - A TYPICAL SYSTEM WOULD NEED ONLY
;DO SO AT REGULAR INTERVALS (IE, 10 MINUTES), CHANNEL CHANGE AND
;POWER UP.
;
;*****************************************************************
;*****************************************************************
;
;
;
;
        ORG     0000H
;
;*****************************
;INITIAL 8748 SETUP
;
        NOP                     ;16 NOPS FOR VECTORED JUMPS
        NOP
        NOP
        NOP
        NOP
        NOP
        NOP
        NOP
        NOP
        NOP
        NOP
        NOP
        NOP
        NOP
        NOP
        NOP
;
        DIS     TCNTI           ;DISABLE COUNTER INTERRUPTS
        DIS     I               ;DISABLE INTERRUPTS
;
;*****************************
;REGISTER DEFINITIONS
;
;R  = LUT LOW ADDR
```

```
;R1 = LUT HIGH ADDR
;R2 = LUT VALUE
;R3 = WORKING NUMBER OF LOW ORDER SAMPLES PER INCREMENT
;R4 = WORKING NUMBER OF HIGH ORDER SAMPLES PER INCREMENT
;R5 = REFERENCE DIFFERENCE VALUE
;R6 = HOLDING NUMBER OF LOW ORDER SAMPLES PER INCREMENT
;R7 = HOLDING NUMBER OF HIGH ORDER SAMPLES PER INCREMENT
;
;********************************
;INITIALIZE SECOND SET OF REGISTERS FOR AVERAGING
;
        SEL     RB1             ;SELECT SECOND SET OF REGS
        MOV     R0,#32          ;INIT R0 WITH INDEX POINTER
        MOV     R2,#16          ;LOOP 16 TIMES
        CLR     A               ;CLEAR A

CLEAR:  MOV     @R0,A           ;MOV 0 TO REG
        INC     R0              ;INCREMENT REG #
        DJNZ    R2,CLEAR        ;JUMP BACK IF MORE TO DO
        MOV     R0,#32          ;INIT REG POINTER
        SEL     RB0             ;SELECT FIRST SET OF REGS
;
;********************************
;LOOP POINT OF TILT CORRECTING ROUTINE
;
START:
;
;********************************
;INITIALIZE WORKING REGISTERS
;
        MOV     R0,#05AH        ;LOAD R0 W/5A = 90 DEC (LOW ADDR)
        MOV     R1,#00H         ;LOAD R1 W/00 (HIGH ADDR)
        MOV     R2,#08H         ;LOAD R2 W/08 TO COMPENSATE PROTOTYPE
                                ;CONSTANT TILT OFFSET (FIRST LUT VALUE)
;
;********************************
;SET-UP AND WAIT TO MEASURE REFERENCES
;
        MOV     A,#0EFH         ;FORCE REFEN* BIT TO 0
        OUTL    P2,A            ;OUTPUT REFEN*
;
        MOV     A,#0FFH         ;PUT FF IN ACC
        OUTL    P1,A            ;OUTPUT FF TO PORT 1 (BECOMES INPUT PORT)
;
        MOVX    A,@R1           ;SET BUS BUS PORT FOR A READ
;
SPIN:   JNT0    SPIN            ;SPIN ON RESYNCGEN LOW (ACTIVE)
SPIN1:  JT0     SPIN1           ;WAIT FOR RESYNCGEN TO GO ACTIVE AGAIN
                                ;REF DATA WILL BE READY TO READ WHEN THIS
                                ;JUMP FALLS THROUGH
;
;********************************
;MEASURE REFERENCES
;
        IN      A,P1            ;READ PORT 1 (START OF LINE REF LEVEL)
        MOV     R5,A            ;SAVE START OF LINE REF IN R5
        INS     A,BUS           ;READ BUS (END OF LINE REF LEVEL)
;
;********************************
;SUBTRACT END REFERENCE FROM START REFERENCE YIELDING REF DIFFERENCE
;
        CPL     A               ;COMPLEMENT END REF
        ADD     A,#01H          ;ADD 1
        ADD     A,R5            ;2S COMPLEMENT SUBTRACT OF END REF FROM
                                ;START REF-DIFFERENCE IN ACC
        JC      AVG
```

```
        MOV     A,#000H             ;FORCE ANSWER TO 0
                                    ;DIFF IN ACC
;
;********************************
;AVERAGE DIFFERENCE OVER LAST 16 VALUES
;
AVG:    SEL     RB1                 ;SELECT SECOND SET OF REGS
        MOV     @R0,A               ;SAVE ACC INTO NEXT AVERAGE REG
        INC     R0                  ;INCR TO NEXT REG
;
        MOV     A,R0                ;GET INDEX INTO ACC
        XOR     #48                 ;COMPARE WITH END OF REGS
        JNZ     AVG1                ;JUMP IF NOT AT END
        MOV     R0,#32              ;RELOAD AVG REG INDEX
;
AVG1:   MOV     R1,#32              ;SET R1 AVG CALCULATION INDEX
        MOV     R2,#16              ;LOOP 16 TIMES
        MOV     R3,#0               ;CLEAR AVERAGE LSB
        MOV     R4,#0               ;CLEAR AVERAGE MSB
;
AVG2:   MOV     A,R3                ;AVG LSB INTO ACC
        ADD     A,@R1               ;SUM VALUE TO LOW ORDER
        MOV     R3,A                ;RESULT BACK TO R3
        MOV     A,R4                ;AVG MSB INTO ACC
        ADDC    A,#0                ;SUM CARRY TO HIGH ORDER
        MOV     R4,A                ;RESULT BACK TO R4
;
        INC     R1                  ;INCREMENT INDEX
        DJNZ    R2,AVG2             ;LOOP BACK TO SUM ALL 16 VALUES
;
        MOV     A,R4                ;HIGH ORDER TO ACC
        SWAP    A                   ;SWAP NIBBLES
        ANL     A,#0F0H             ;STRIP OFF HIGH ORDER
        MOV     R4,A                ;RESULT BACK TO R4
;
        MOV     A,R3                ;LOW ORDER TO ACC
        SWAP    A                   ;SWAP NIBBLES
        ANL     A,#0FH              ;STRIP OFF LOW ORDER
;
        ORL     A,R4                ;COMBINE NIBBLES FROM EACH
;
        SEL     RB0                 ;SELECT FIRST BANK OF REGS
;
        MOV     R5,A                ;AVERAGE REF DIFFERENCE TO R5
        INC     R5                  ;JUSTIFY REF DIFFERENCE VALUE
;
;********************************
;DISABLE REFEN*
;
        MOV     A,#0FFH             ;FORCE REFEN* BIT TO 1
        OUTL    P2,A                ;OUTPUT REFEN*
;
;********************************
;CALCULATE NUMBER OF SAMPLES PER LUT VALUE INCREMENT
;THERE ARE 746 (DECIMAL) SAMPLES BETWEEN REFERENCE POINTS
;(02EA HEX), WHICH IS FD15 COMPLEMENT HEX
;
        MOV     R6,#15H             ;LOAD LOW ORDER IN REG 6
        MOV     R7,#0FDH            ;LOAD HIGH ORDER IN REG 7
;
        MOV     R3,#00H             ;ZERO OUT LOW ORDER SUBTRACT COUNTER
        MOV     R4,#00H             ;ZERO OUT HIGH ORDER SUBTRACT COUNTER
;
SLOOP:  MOV     A,R6                ;LOW ORDER TO ACC
        ADD     A,R5                ;ADD DIFF
        MOV     R6,A                ;RETURN TO R6
```

```
        JNC     SLOOP1          ;SUBTRACT DONE IF NO CARRY
        MOV     A,R7            ;HIGH ORDER TO ACC
        ADD     A,#001H         ;ADD 1 (CARRY)
        MOV     R7,A            ;RETURN TO R7
        JC      SUBDONE         ;IF CARRY THEN SUBTRACTION IS DONE
;
SLOOP1: MOV     A,R3
        ADD     A,#001H         ;INCREMENT LOW ORDER SUB COUNTER
        MOV     R3,A
        JNC     SLOOP           ;LOOP BACK IF NOT ZERO
        INC     R4              ;INCR HIGH ORDER SUB COUNTER
        JMP     SLOOP           ;LOOP BACK
;
SUBDONE:MOV     A,R3            ;INITIATE WORKING SAMPLE HOLDING REG
        MOV     R6,A
        INC     R4
        MOV     A,R4
        MOV     R7,A
;
;********************************
;OUTPUT LUT ADDRESS TO EASE
;
LOOP:   MOV     A,R0
        OUTL    P1,A            ;OUTPUT LOW ADDR TO EASE
;
        MOV     A,R1
        RR      A
        RR      A               ;ADDRESS BITS IN HIGH ORDER
        ANL     A,#0C0H         ;FORCE LUTLD* LOW
        ORL     A,#010H         ;FORCE REFEN* HIGH
        OUTL    P2,A            ;OUTPUT HIGH ADDR TO EASE
;
;********************************
;OUTPUT LUT VALUE
;
        MOV     A,R2
        OUTL    BUS,A           ;OUTPUT R2 TO EASE LUT
;
;********************************
;CHECK IF LUT VALUE SHOULD BE INCREMENTED
;
        MOV     A,R3            ;GET LOW ORDER SAMPLE DECR COUNTER IN ACC
        DEC     A               ;DECREMENT WORKING SAMPLE COUNTER
        MOV     R3,A            ;LOAD NEW LOW ORDER COUNTER INTO R3
        JNZ     CONT            ;CONTINUE IF NOT ZERO
        MOV     A,R4            ;GET HIGH SAMPLE DECR COUNTER IN ACC
        DEC     A               ;DECR WORKING SAMPLE COUNTER
        MOV     R4,A            ;LOAD NEW HIGH ORDER COUNTER INTO R4
        JNZ     CONT
        INC     R2              ;INCREMENT LUT VALUE
        MOV     A,R6            ;RE-INITIALIZE WORKING SAMPLE DECR COUNTER
        MOV     R3,A
        MOV     A,R7
        MOV     R4,A
;
;********************************
;INCREMENT LUT ADDRESS AND CHECK FOR ZERO WRAP
;
CONT:   MOV     A,R0            ;R0 INTO ACC
        INC     A               ;INCR ACC
        MOV     R0,A            ;RESTORE INCREMENTED R0
        JNZ     WRCHK           ;JUMP TO WRAP CHECK IF NOT ZERO
        MOV     A,R1            ;R1 INTO ACC
        INC     A               ;INCR ACC
        MOV     R1,A            ;RESTORE INCREMENTED R1
;
```

```
;********************************
;CHECK FOR 912 WRAP TO 0 (A LITTLE MORE THAN 910 FOR JITTER)
;
WRCHK:  MOV     A,R1            ;GET HIGH ADDR IN ACC
        ADD     A,#0FDH         ;ADD SO THAT 03 IS FORCED TO ZERO
        JNZ     TERMCHK         ;HIGH ADDR NOT ZERO SO LOOP BACK
        MOV     A,R0            ;GET LOW ADDR IN ACC
        ADD     A,#070H         ;ADD SO THAT 90 IS FORCED TO ZERO
        JNZ     TERMCHK         ;LOW ADDR NOT ZERO SO LOOP BACK
;
        MOV     R0,#00H         ;LOAD LOW ADDR WITH 00
        MOV     R1,#00H         ;LOAD HIGH ADDR WITH 00
        JMP     LOOP            ;LOOP BACK
;
;********************************
;CHECK FOR TERMINAL COUNT OF 90 DECIMAL
;
TERMCHK:MOV     A,R0            ;LOW ADDR INTO ACC
        ADD     A,#0A6H         ;ADD SO THAT 5A IS FORCED TO ZERO
        JNZ     LOOP            ;LOOP BACK IF NOT ZERO
        MOV     A,R1            ;GET HIGH ADDR INTO ACC
        JNZ     LOOP            ;LOOP BACK IF NOT ZERO
                                ;OTHERWISE WERE ALL DONE
;
;********************************
;WRAP IT UP
;
        MOV     A,#0FFH
        OUTL    P2,A            ;OUTPUT LUTLD* HIGH
;
DONE:   JMP     START           ;ENDLESSLY LOOP BACK TO START
                                ;(RUNNING REFERENCE DIFFERENCE AVERAGE
                                ;NOT RESTARTED)
;
        END
```

## Claims

1. A method for correcting line tilt in a video signal, said method comprising the steps of:
adding first and second amplitude reference levels of predetermined amplitudes to time-spaced portions of said video signal;
transmitting said video signal;
receiving said video signal;
sampling said first and second amplitude reference levels in said received signal;
calculating the rate of line tilt based on the difference between the amplitudes of said first and second amplitude reference levels as received;
correcting said received signal based on said rate of line tilt.

2. The method of claim 1 wherein said predetermined amplitudes are equal.

3. The method of claim 1 wherein said first amplitude reference level is added to the beginning of the video information portion of a video line signal and said second amplitude reference level is added to the end of said video information portion.

4. The method of claim 1 wherein said first and second amplitude reference levels are added to time-spaced portions of the vertical blanking interval of each video signal.

5. The method of claim 1 wherein said first amplitude reference level is added to a horizontal blanking interval of said video signal and said second amplitude reference level is added to a subsequent horizontal blanking interval of said video signal.

6. The method of claim 1 wherein said calculating and correcting steps comprise computing an inverse line tilt ramp signal and adding said ramp signal to said video signal.

7. The method of claim 1 wherein:
said adding step comprises digitizing said video signal into a plurality of numbered sample points, setting the values of selected ones of said sample points equal to said amplitude reference levels, and restoring said digitized video signal to analog form; said method further comprising the steps of:
converting said received analog video signal to digital form after said receiving step and before said sampling step; and
reconverting said signal to analog form after said correcting step.

8. The method of claim 7 wherein said calculating and correcting steps comprise:
determining said difference between the amplitudes of said first and second amplitude reference levels as received;
dividing said difference by the number of said plurality of sample points in said portion of said digitized video signal between said selected ones of said sample points and multiplying by the ratio between said predetermined amplitudes to determine a per-point correction value; and
summing, at each of said sample points, the amplitude of said digitized signal at said sample point with the product of said per-point correction value and the number of said sample point.

9. A method for encoding and decoding a video signal, said method comprising the steps of:
scrambling said video signal by line segmentation;
adding first and second amplitude reference levels of predetermined amplitudes to time-spaced portions of said scrambled video signal;
transmitting said scrambled video signal;
receiving said scrambled video signal;
sampling said first and second amplitude reference levels in said received signal;
calculating the rate of line tilt based on the difference between the amplitudes of said first and second amplitude reference levels as received; and
reconstructing said scrambled video signal based on said rate of line tilt.

10. The method of claim 9 wherein said predetermined amplitudes are equal.

11. The method of claim 9 wherein said reconstructing step comprises correcting the line tilt of said scrambled video signal and unscrambling said corrected scrambled video signal.

12. The method of claim 9 wherein said reconstructing step comprises unscrambling said scrambled video signal and correcting the line tilt of said unscrambled video signal.

13. The method of claim 9 wherein;
said adding and scrambling steps comprise digitizing said video signal into a plurality of sample points, reserving selected ones of said sample points, scrambling the portion of said digitized video signal between said selected ones of said sample points by reading out sample points starting at a selected intermediate sample point through to the end of said portion of the signal and then from the beginning of said portion of the signal to the intermediate sample point next preceding said selected intermediate sample point, setting the values of said selected ones of said sample points equal to said amplitude reference levels, and restoring said scrambled digitized video signal to analog form; said method further comprising the steps of:
converting said received analog video signal to digital form after said receiving step and before said sampling step; and
reconverting said signal to analog form after said reconstructing step.

14. The method of claim 13 wherein said calculating and reconstructing steps comprise:
determining said difference between the amplitudes of said first and second amplitude reference levels as received;
dividing said difference by the number of said plurality of sample points in said portion of said digitized video signal and multiplying by the ratio between said predetermined amplitudes to determine a per-point correction value;
summing, at each of said sample points, the amplitude of said scrambled digitized signal at said sample point with the product of said per-point correction value and the number of said sample point; and
reading out said portion of said scrambled digitized video signal starting at said selected intermediate sample point through to the end of said portion of said scrambled signal and then from the beginning of said portion of the signal to the intermediate sample point next preceding said selected intermediate sample point to produce an unscrambled digitized video signal.

15. The method of claim 13 wherein said calculating and reconstructing steps comprise:
determining said difference between said first and second amplitude reference levels as received;
dividing said difference by the number of said plurality of sample points in said portion of said digitized video signal and multiplying by the ratio between said predetermined amplitudes to determine a line tilt rate;
reading out said portion of said scrambled digitized video signal starting at said selected intermediate sample point through to the end of said portion of said scrambled signal and then from the beginning of said portion of the signal to the intermediate sample point next preceding said selected intermediate sample point to produce an unscrambled digitized video signal; and
correcting said unscrambled digitized video signal based on said line tilt rate.

16. Apparatus for correcting line tilt in a video signal, said apparatus comprising:
means for adding first and second amplitude reference levels of predetermined amplitudes to time-spaced portions of said video signal;
means for transmitting said video signal;
means for receiving said video signal;
means for sampling said first and second amplitude reference levels in said received signal;
means for calculating the rate of line tilt based on the difference between the amplitudes of said first and second amplitude reference levels as received;
means for correcting said received signal based on said rate of line tilt.

17. The apparatus of claim 16 wherein said sampling means comprises means for storing the instantaneous value of said video signal and means for signalling to said storing means that said instantaneous value is one of said amplitude reference levels.

18. The apparatus of claim 17 wherein said storing means is a latch.

19. The apparatus of claim 16 wherein said calculating means comprises a microprocessor.

20. The apparatus of claim 16 wherein said correcting means comprises means for computing an inverse line tilt ramp based on said rate of line tilt and means for summing said ramp and said signal.

21. The apparatus of claim 16 wherein said adding means comprises means for digitizing said video signal into to a plurality of numbered sample points, means for setting the values of selected ones of said sample points equal to said amplitude reference levels, and means for restoring said digitized video signal to analog form; said apparatus further comprising:
means for converting said received video signal to digital form prior to sampling by said sampling means; and
means for reconverting said signal to analog form after correction by said correcting means.

22. The apparatus of claim 21 wherein said calculating and correcting means comprise:
means for determining said difference between the amplitudes of said first and second amplitude reference levels as received;
means for dividing said difference by the number of said plurality of sample points in said portion of said digitized video signal between said selected ones of said sample points and multiplying by the ratio between said predetermined amplitudes to determine a per-point correction value; and
means for summing, at each of said sample points, the amplitude of said digitized signal at said sample point with the product of said per-point correction value and the number of said sample point.

23. The apparatus of claim 21 wherein;
said difference determining means is a microprocessor;
said difference dividing and multiplying means is said microprocessor; and
said summing means comprises said microprocessor, means for storing said products of said per-point correction values and the numbers of said sample points, adder means for adding said pro ducts to said sample points, and means for transferring said products to said adder means.

24. The apparatus of claim 23 wherein said storing means comprises a random access memory, and said transferring means comprises a latch.

25. Apparatus for encoding and decoding a video signal, said apparatus comprising:
means for scrambling said video signal by line segmentation;
means for adding first and second amplitude reference levels of predetermined amplitudes to time-spaced portions of said scrambled video signal;
means for transmitting said scrambled video signal;
means for receiving said scrambled video signal;
means for sampling said first and second amplitude reference levels in said received signal;
means for calculating the rate of line tilt based on the difference between the amplitudes of said first and second amplitude reference levels as received; and
means for reconstructing said scrambled video signal based on said rate of line tilt.

26. The apparatus of claim 25 wherein said sampling means comprises means for storing the instantaneous value of said video signal and means for signaling to said storing means that said instantaneous value is one of said amplitude reference levels.

27. The apparatus of claim 25 wherein said storing means is a latch.

28. The apparatus of claim 26 wherein said calculating means comprises a microprocessor.

29. The apparatus of claim 25 wherein said adding and scrambling means comprises:
means for digitizing said video signal into a plurality of numbered sample points;
means for reserving selected ones of said sample points;
means for scrambling the portion of said digitized video signal between said selected ones of said sample points by reading out sample points starting at a selected intermediate sample point through to the end of said portion of the signal and then from the beginning of said portion of the signal to the intermediate sample point next proceding said selected intermediate sample point;
means for setting the values of said selected ones of said sample points equal to said amplitude reference levels; and
means for restoring said digitized video signal to analog form; said apparatus further comprises:
means for converting said received video signal to digital form prior to sampling by said sampling means; and
means for reconverting said signal to analog form after reconstruction by said reconstructing means.

30. The apparatus of claim 29 wherein said calculating and reconstructing means comprise:
means for determining said difference between the amplitudes of said first and second amplitude reference levels as received;
means for dividing said difference by the number of said plurality of sample points in said protion of said digitized video signal between said selected ones of said sample poins and multiplying by the ratio between said predetermined amplitudes to determine a per-point correction value;
means for summing, at each of said sample points, the amplitude of said scrambled digitized signal at said sample point with the product of said per-point correction value and the number of said sample point; and
means for reading out said portion of said scrambled digitized video signal starting at said selected intermediate sample point through the end of said portion of said scrambled signal and then from the beginning of said portion of the signal to the intermediate sample point next preceding said selected intermediate sample point to produce an unscrambled digitized video signal.

31. The apparatus of claim 30 wherein:
said difference determining means is a microprocessor;
said difference dividing and multiplying means is said microprocessor; and
said summing means comprises said microprocessor, means for storing said products of said per-point correction value and the numbers of said sample points, adder means for adding said products to said sample points, and means for transferring said products to said adder means.

32. The apparatus of claim 31 wherein said storing means comprises a random access memory and said transferring means comprises a latch.

33. The apparatus of claim 29 wherein said calculating and reconstructing means comprise:
means for determining said difference between the amplitudes of said first and second amplitude reference levels as received;
means for dividing said difference by the number of said plurality of sample points in said portion of said digitized video signal and multiplying by the ratio between said predetermined amplitudes to determine a line tilt rate;
means for reading out said portion of said scrambled digitized video signal starting at said selected intermediate sample point through to the end of said portion of said scrambled signal and then from the beginning of said portion of the signal to the intermediate sample point next preceding said selected intermediate sample point to produce an unscrambled digitized video signal; and
means for correcting said unscrambled digitized video signal based on said line tilt rate.

34. The apparatus of claim 33 wherein:
said difference determining and multiplying means is a microprocessor;
said difference dividing and mutliplying means is said microprocessor; and
said correcting means comprises said microprocessor.

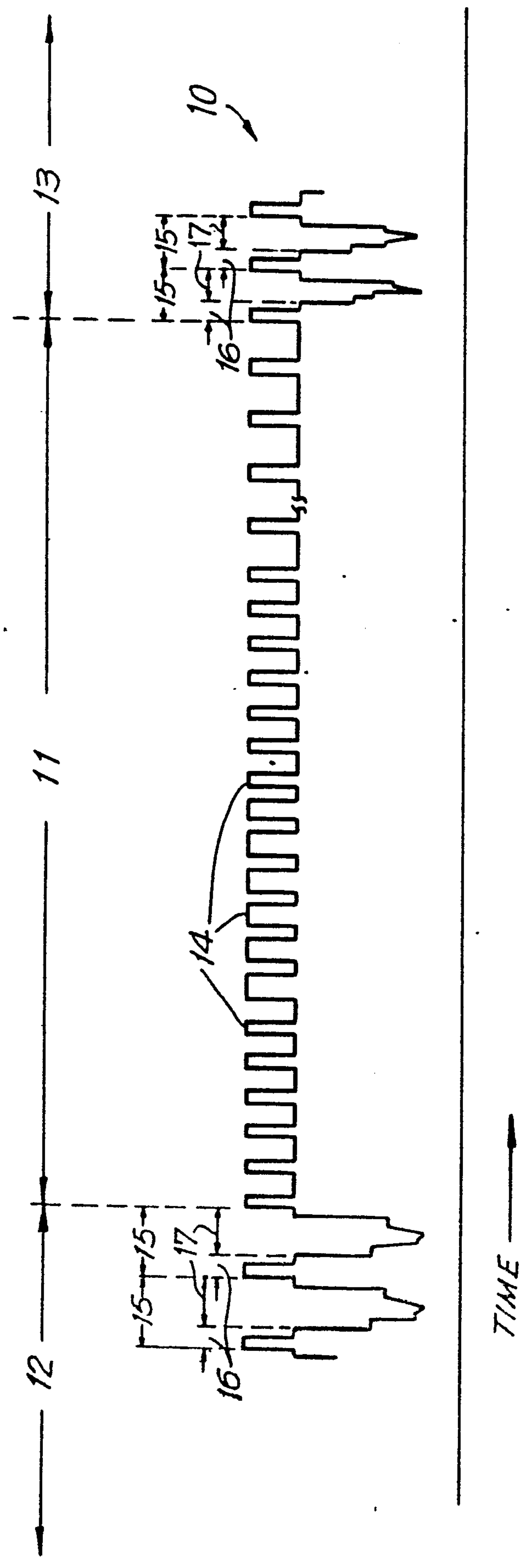


FIG. 1

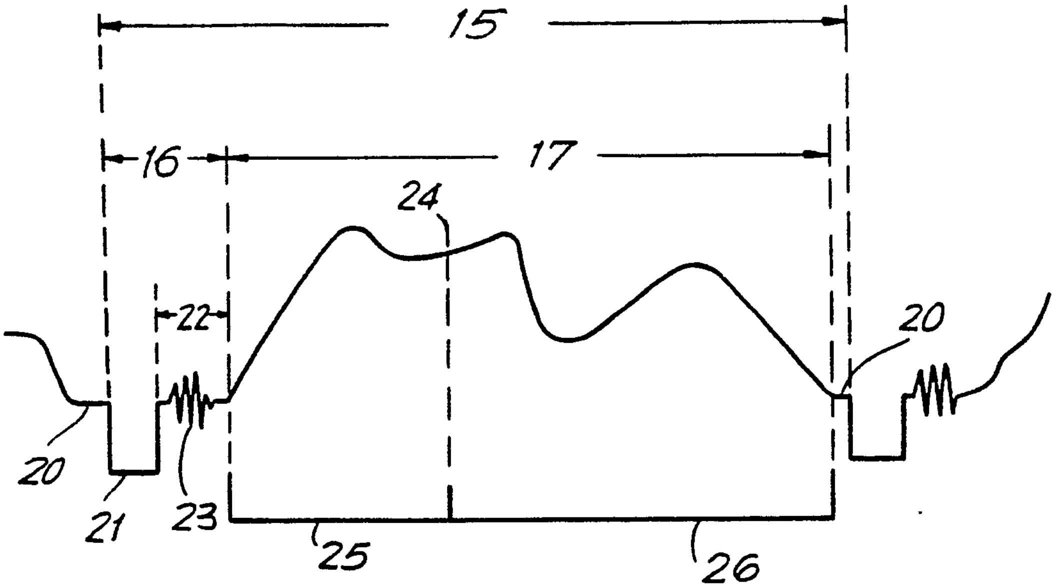


FIG. 2

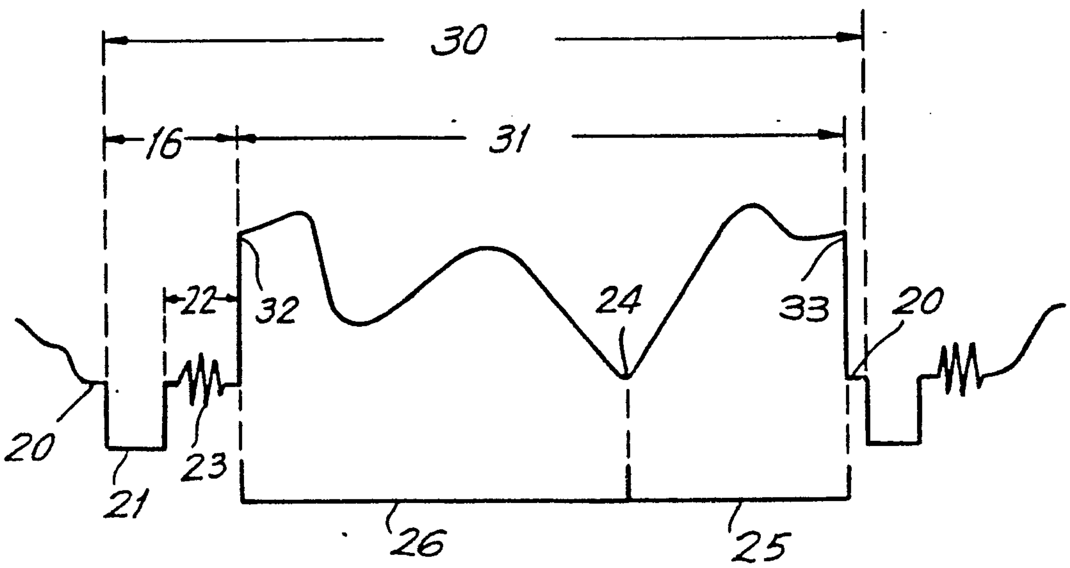


FIG. 3

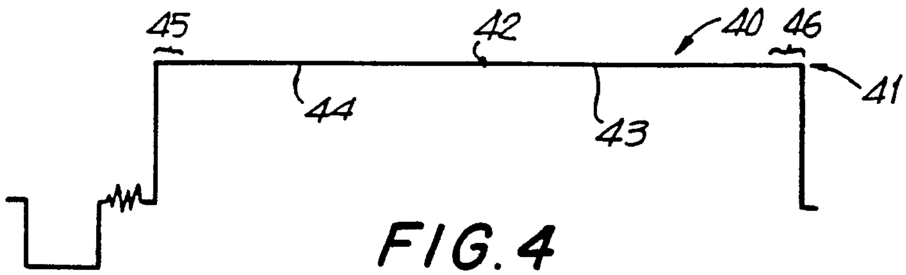


FIG. 4

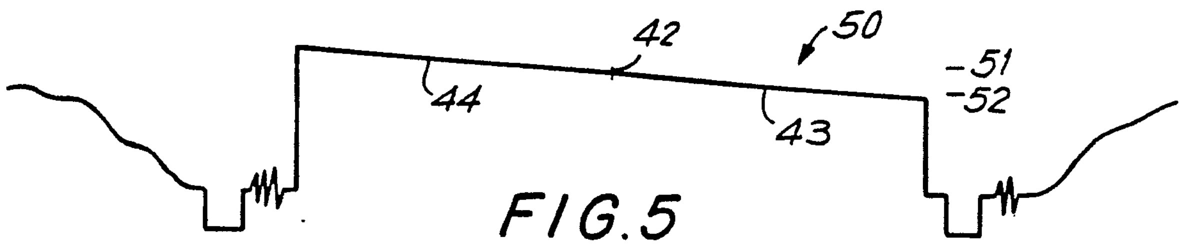


FIG. 5

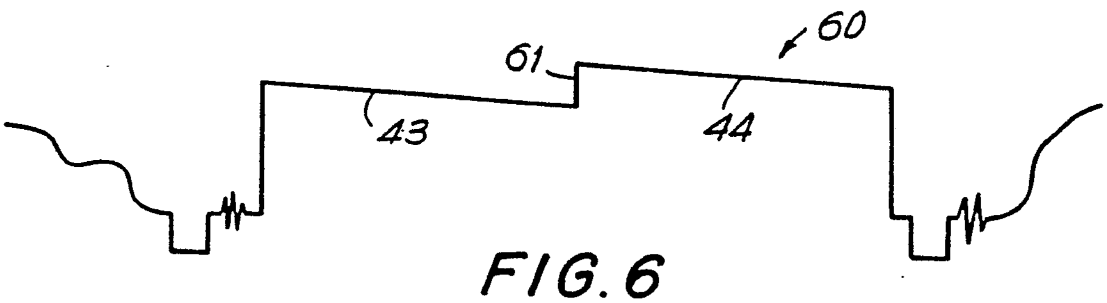


FIG. 6

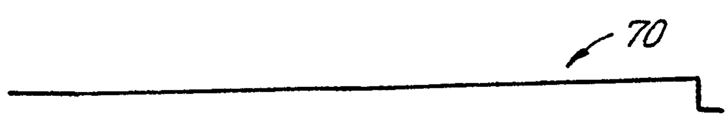


FIG. 7

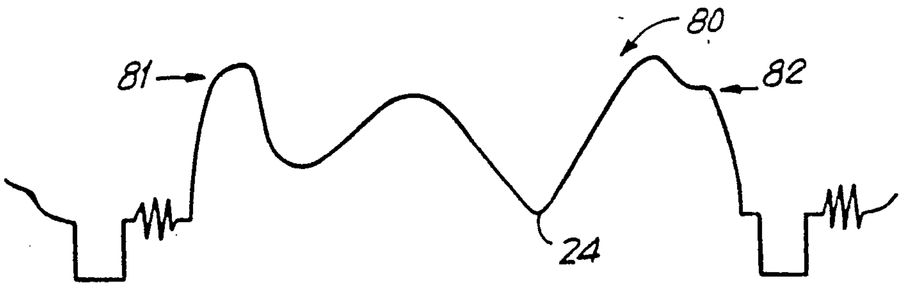


FIG. 8

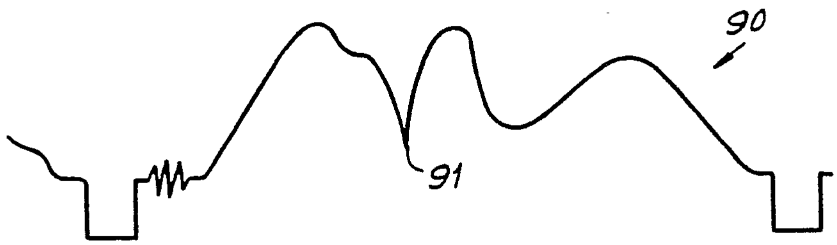


FIG. 9

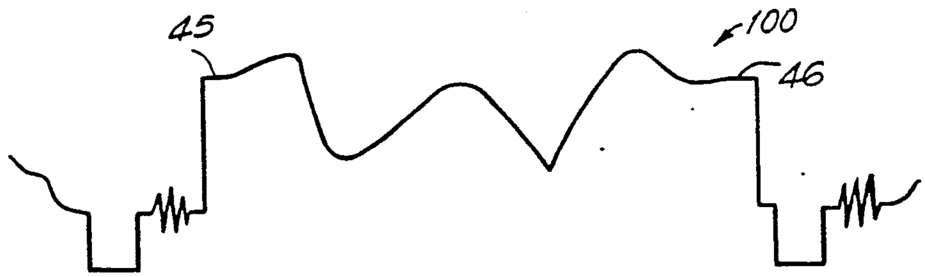


FIG. 10

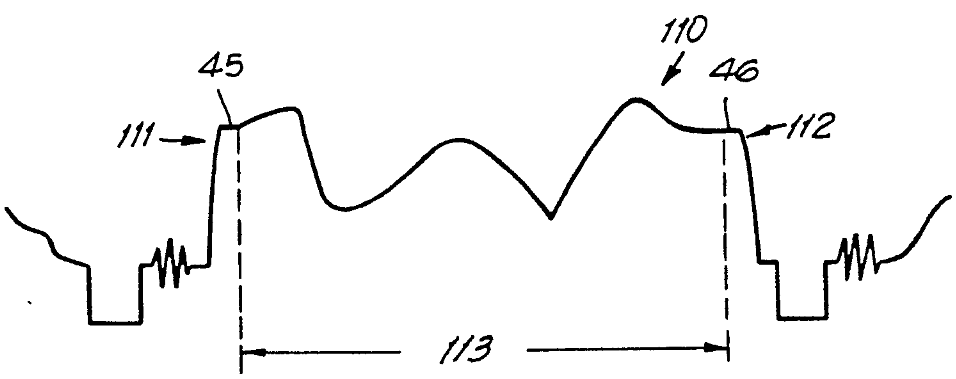


FIG. 11

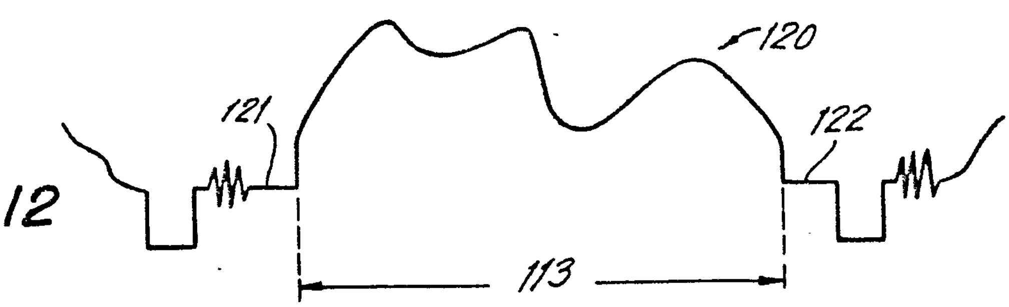


FIG. 12

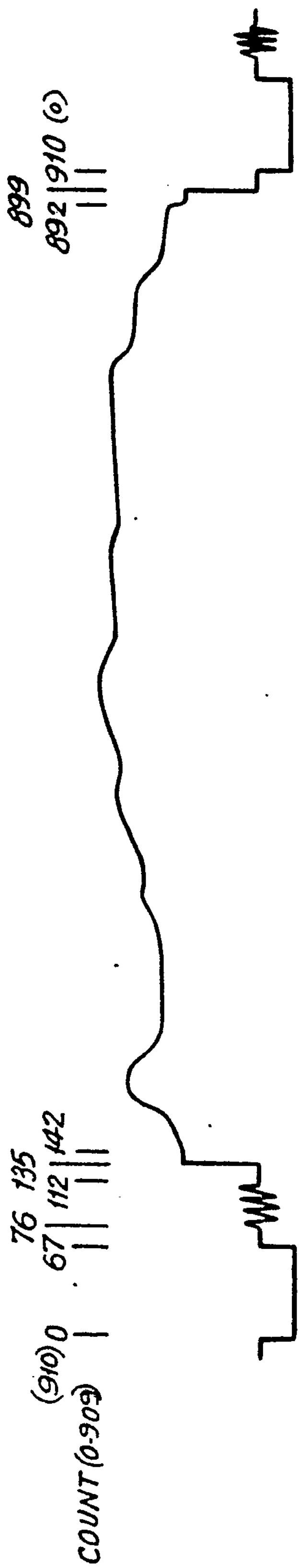


FIG.13

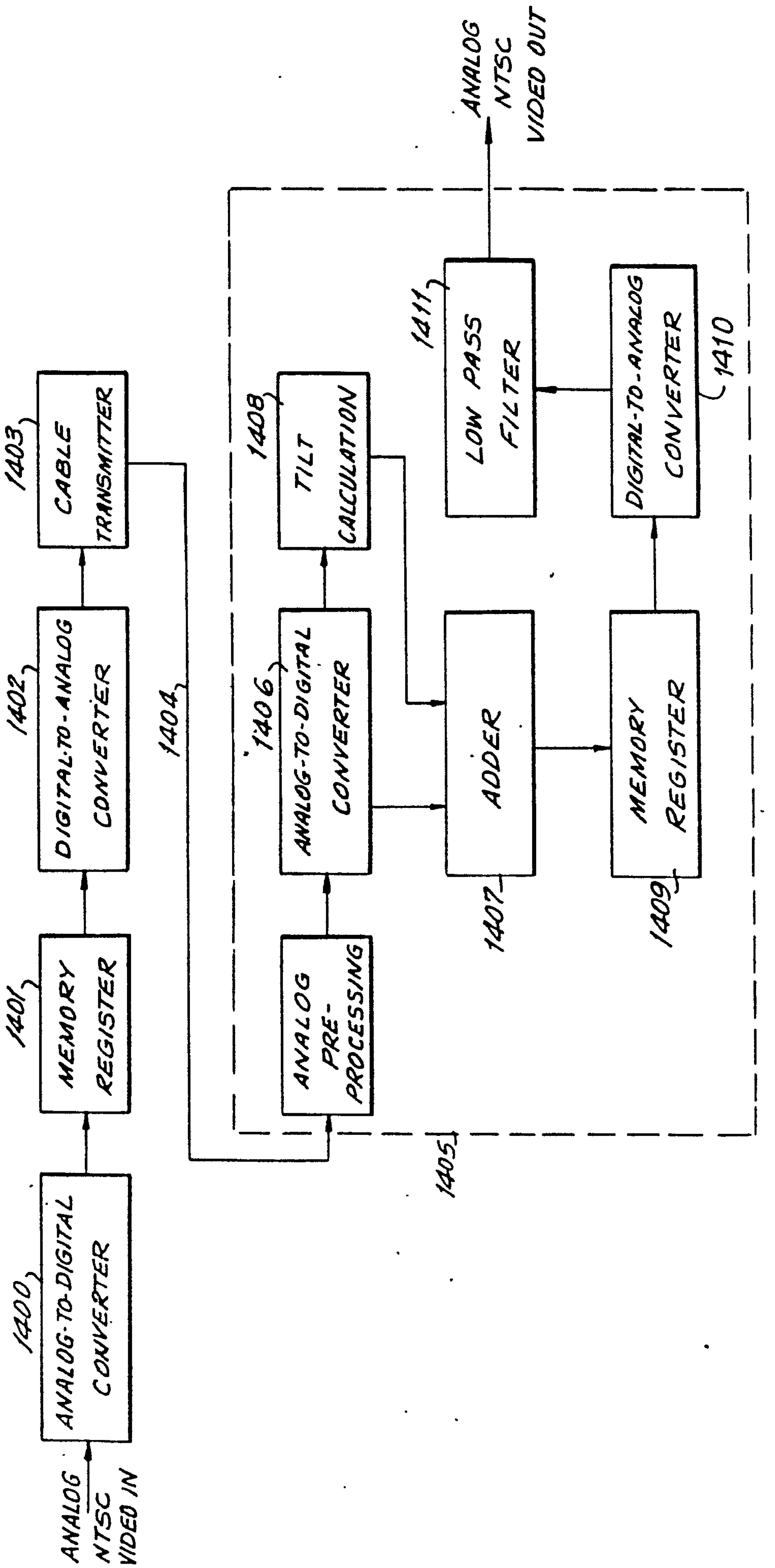
ANALOG NTSC VIDEO IN
1400
ANALOG-TO-DIGITAL CONVERTER
1401
MEMORY REGISTER
1402
DIGITAL-TO-ANALOG CONVERTER
1403
CABLE TRANSMITTER
1404
1405
ANALOG PRE-PROCESSING
1406
ANALOG-TO-DIGITAL CONVERTER
1408
TILT CALCULATION
1407
ADDER
1409
MEMORY REGISTER
1410
DIGITAL-TO-ANALOG CONVERTER
1411
LOW PASS FILTER
ANALOG NTSC VIDEO OUT

FIG. 14

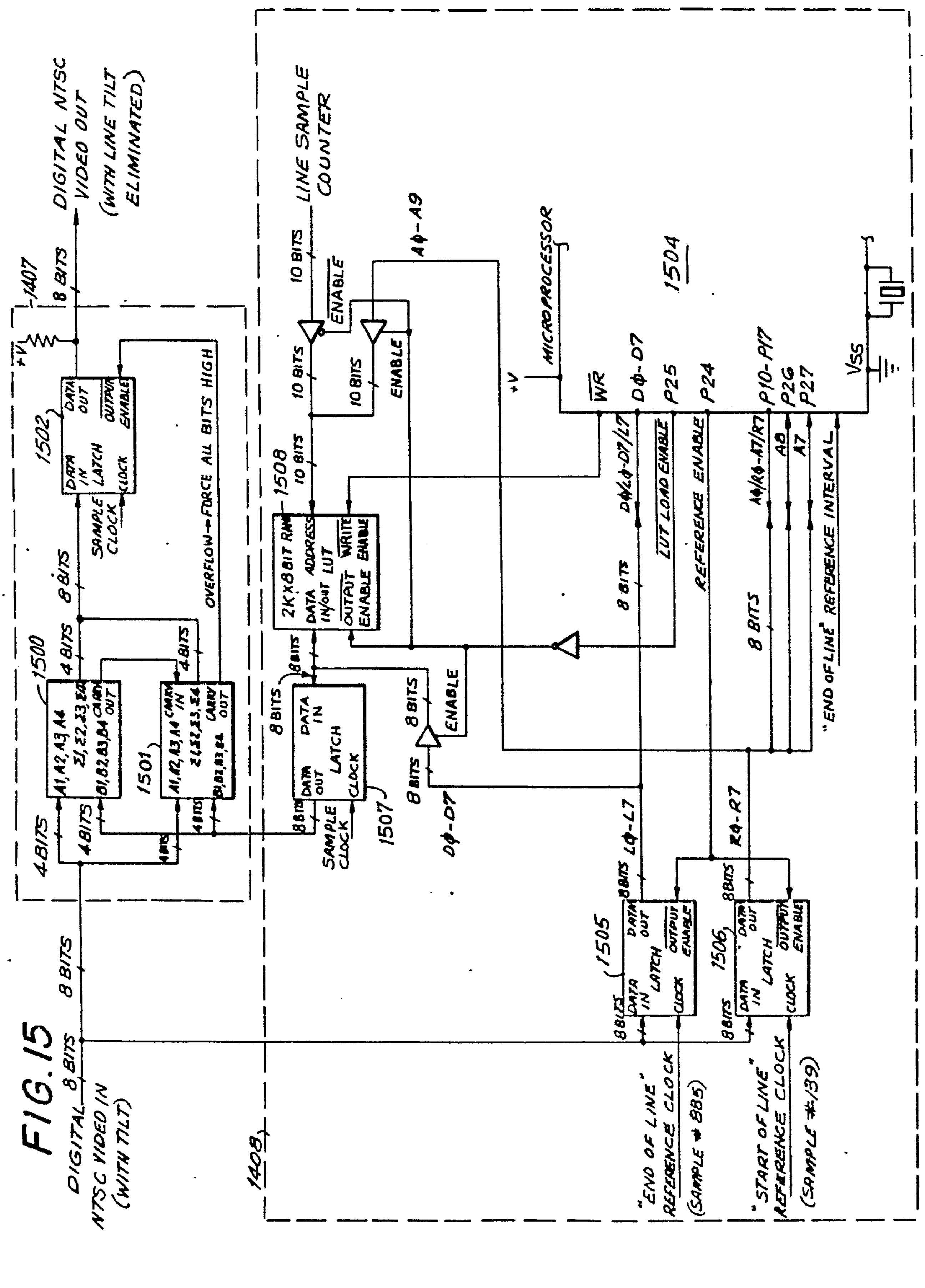
DIGITAL NTSC VIDEO IN (WITH TILT)
8 BITS
DIGITAL NTSC VIDEO OUT (WITH LINE TILT ELIMINATED)
1407
+V
1500
1501
1502
A1,A2,A3,A4
Σ1,Σ2,Σ3,Σ4
B1,B2,B3,B4
CARRY OUT
CARRY IN
4 BITS
DATA IN
LATCH
DATA OUT
OUTPUT ENABLE
CLOCK
SAMPLE CLOCK
OVERFLOW→FORCE ALL BITS HIGH
1408
1507
1508
2K X 8 BIT RAM
DATA IN/OUT
ADDRESS LUT
OUTPUT ENABLE
WRITE ENABLE
10 BITS
LINE SAMPLE COUNTER
ENABLE
AΦ-A9
DΦ-D7
MICROPROCESSOR
1504
WR
P25
P24
P10-P17
P26
P27
VSS
DΦ/LΦ-D7/L7
LUT LOAD ENABLE
REFERENCE ENABLE
AΦ/RΦ-A7/R7
A8
A7
"END OF LINE" REFERENCE INTERVAL
LΦ-L7
RΦ-R7
1505
1506
"END OF LINE" REFERENCE CLOCK (SAMPLE # 885)
"START OF LINE" REFERENCE CLOCK (SAMPLE #139)

FIG. 15

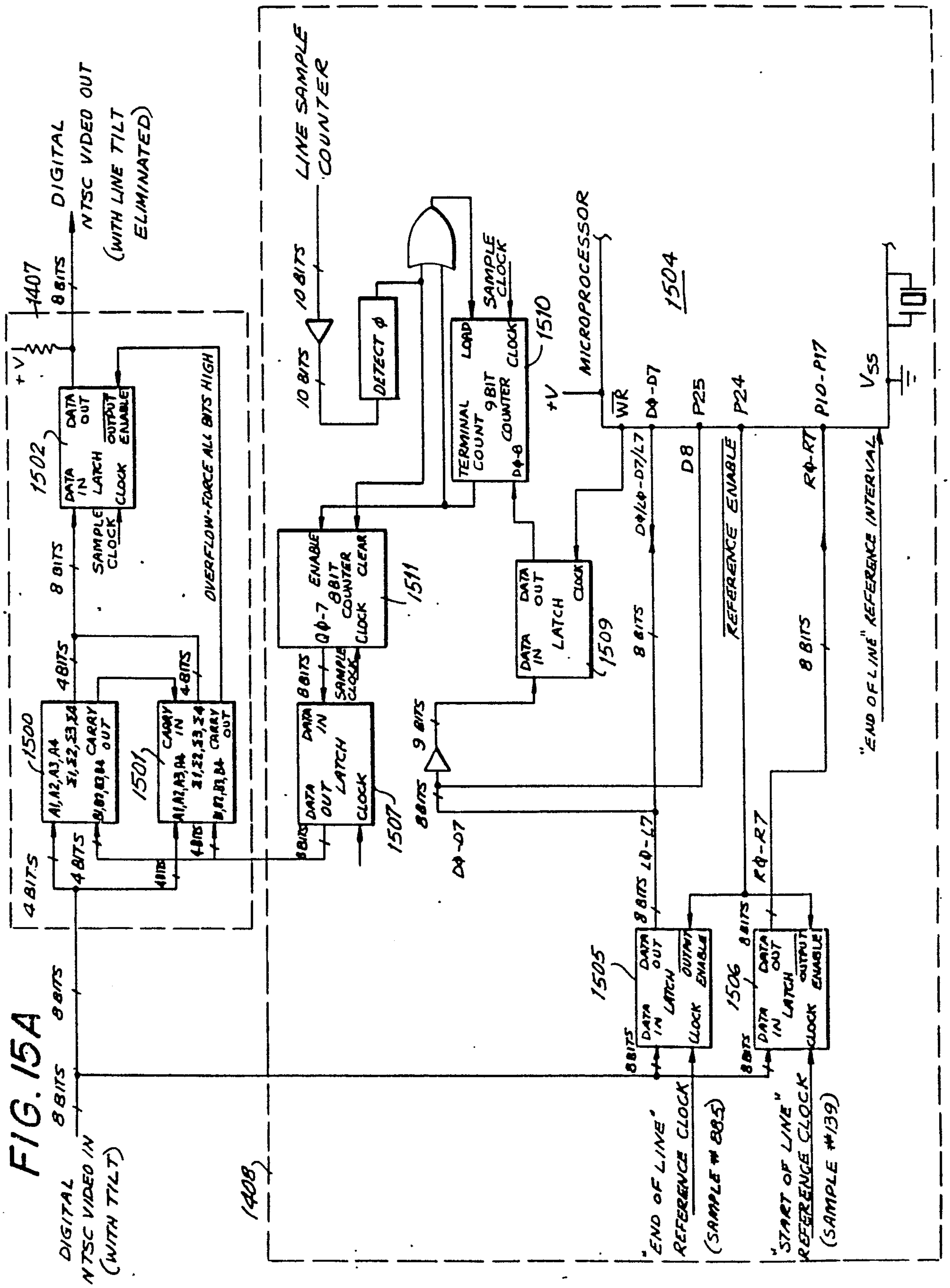
DIGITAL NTSC VIDEO IN (WITH TILT)
8 BITS
8 BITS
4 BITS
4 BITS
1500
A1,A2,A3,A4
Σ1,Σ2,Σ3,Σ4
B1,B2,B3,B4
CARRY OUT
1501
CARRY IN
4 BITS
1502
DATA IN LATCH
DATA OUT
OUTPUT ENABLE
SAMPLE CLOCK
OVERFLOW-FORCE ALL BITS HIGH
+V
1407
DIGITAL NTSC VIDEO OUT (WITH LINE TILT ELIMINATED)
LINE SAMPLE COUNTER
10 BITS
DETECT ϕ
TERMINAL COUNT
9 BIT COUNTER
LOAD
CLOCK
Dϕ-8
1510
SAMPLE CLOCK
Qϕ-7
8 BIT COUNTER
ENABLE
CLEAR
1511
1507
1509
9 BITS
Dϕ-D7
MICROPROCESSOR
1504
WR
Dϕ-D7
P25
P24
P10-P17
VSS
Dϕ/Lϕ-D7/L7
D8
REFERENCE ENABLE
Rϕ-R7
"END OF LINE" REFERENCE INTERVAL
Lϕ-L7
1505
1506
"END OF LINE" REFERENCE CLOCK (SAMPLE #885)
"START OF LINE" REFERENCE CLOCK (SAMPLE #139)
1408

FIG. 15A

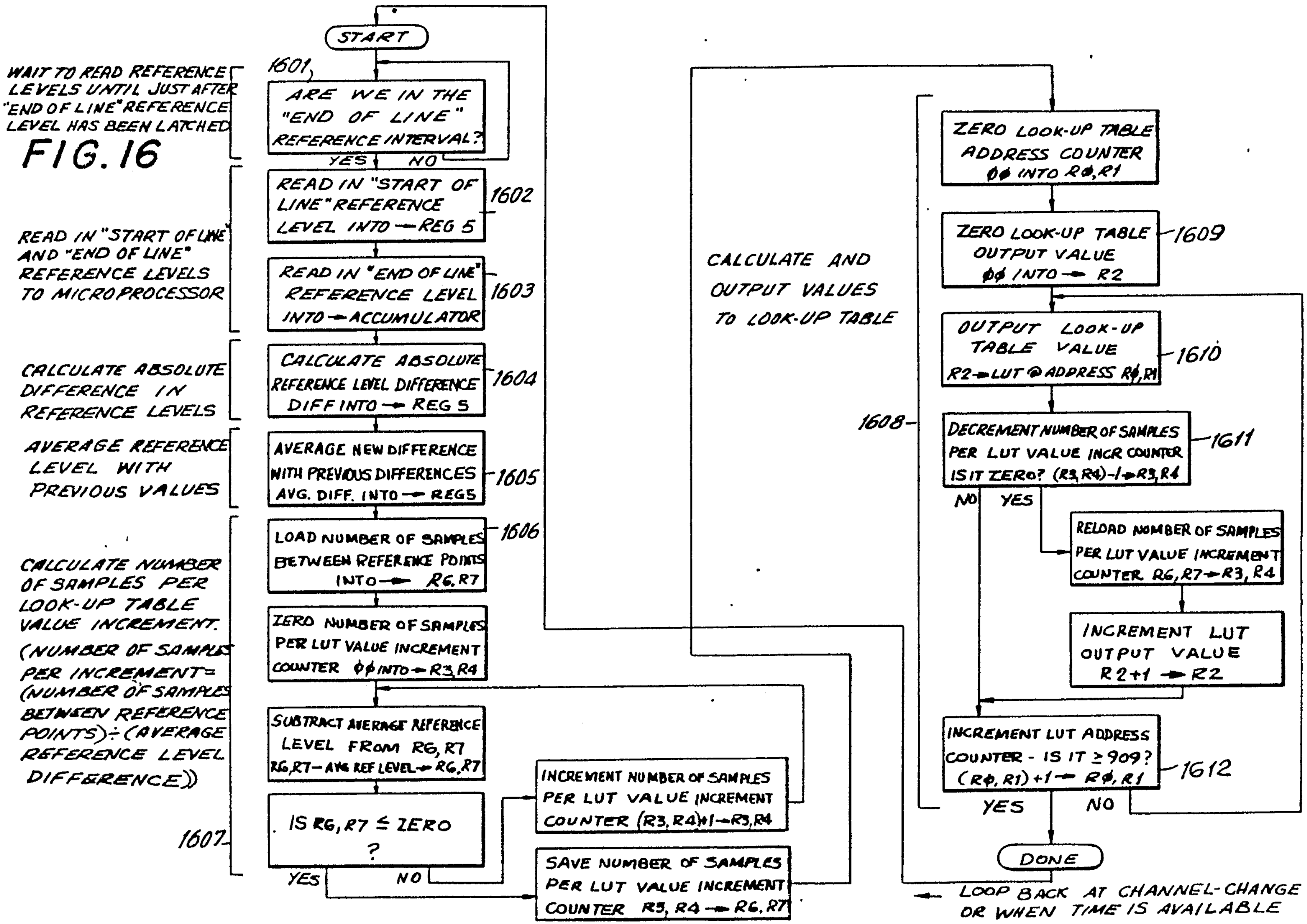
START
WAIT TO READ REFERENCE LEVELS UNTIL JUST AFTER "END OF LINE" REFERENCE LEVEL HAS BEEN LATCHED
1601
ARE WE IN THE "END OF LINE" REFERENCE INTERVAL?
YES
NO
READ IN "START OF LINE" AND "END OF LINE" REFERENCE LEVELS TO MICROPROCESSOR
READ IN "START OF LINE" REFERENCE LEVEL INTO → REG 5
1602
READ IN "END OF LINE" REFERENCE LEVEL INTO → ACCUMULATOR
1603
CALCULATE ABSOLUTE DIFFERENCE IN REFERENCE LEVELS
CALCULATE ABSOLUTE REFERENCE LEVEL DIFFERENCE DIFF INTO → REG 5
1604
AVERAGE REFERENCE LEVEL WITH PREVIOUS VALUES
AVERAGE NEW DIFFERENCE WITH PREVIOUS DIFFERENCES AVG. DIFF. INTO → REG5
1605
CALCULATE NUMBER OF SAMPLES PER LOOK-UP TABLE VALUE INCREMENT. (NUMBER OF SAMPLES PER INCREMENT= (NUMBER OF SAMPLES BETWEEN REFERENCE POINTS)÷(AVERAGE REFERENCE LEVEL DIFFERENCE))
LOAD NUMBER OF SAMPLES BETWEEN REFERENCE POINTS INTO → R6,R7
1606
ZERO NUMBER OF SAMPLES PER LUT VALUE INCREMENT COUNTER ØØ INTO → R3,R4
SUBTRACT AVERAGE REFERENCE LEVEL FROM R6,R7 R6,R7 – AVG REF LEVEL → R6,R7
IS R6,R7 ≤ ZERO ?
1607
YES
NO
INCREMENT NUMBER OF SAMPLES PER LUT VALUE INCREMENT COUNTER (R3,R4)+1 → R3,R4
SAVE NUMBER OF SAMPLES PER LUT VALUE INCREMENT COUNTER R3, R4 → R6,R7
CALCULATE AND OUTPUT VALUES TO LOOK-UP TABLE
1608
ZERO LOOK-UP TABLE ADDRESS COUNTER ØØ INTO RØ,R1
ZERO LOOK-UP TABLE OUTPUT VALUE ØØ INTO → R2
1609
OUTPUT LOOK-UP TABLE VALUE R2 → LUT @ ADDRESS RØ,R1
1610
DECREMENT NUMBER OF SAMPLES PER LUT VALUE INCR COUNTER IS IT ZERO? (R3,R4)-1 → R3,R4
1611
NO
YES
RELOAD NUMBER OF SAMPLES PER LUT VALUE INCREMENT COUNTER R6,R7 → R3,R4
INCREMENT LUT OUTPUT VALUE R2+1 → R2
INCREMENT LUT ADDRESS COUNTER - IS IT ≥ 909? (RØ,R1)+1 → RØ,R1
1612
YES
NO
DONE
LOOP BACK AT CHANNEL-CHANGE OR WHEN TIME IS AVAILABLE

FIG. 16

FIG.17A

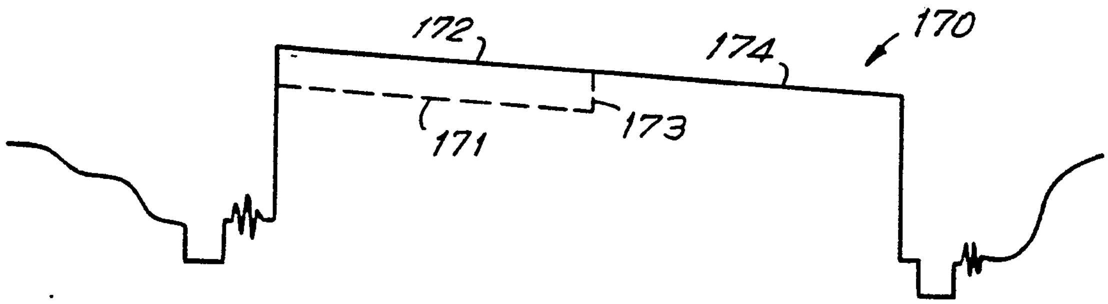


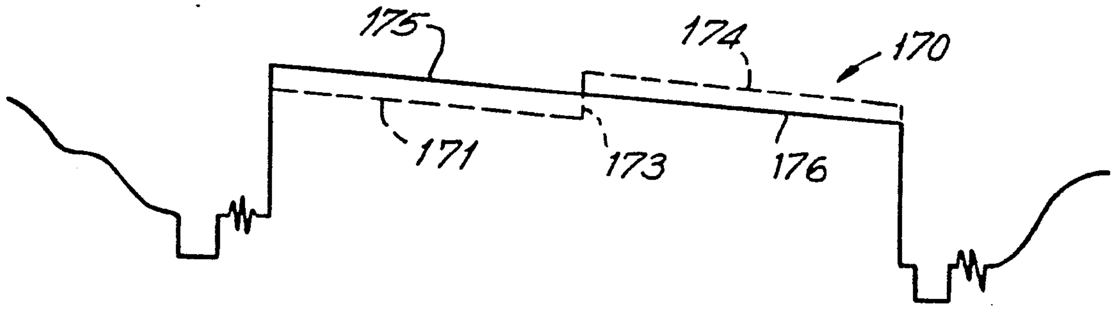


FIG.17B

European Patent Office

# EUROPEAN SEARCH REPORT

Application number

EP 86 30 3063

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-3 410 085 (INSTITUT FÜR RUNDFUNKTECHNIK GmbH)<br>* Page 10, line 6 - page 11, line 17; figures 5,6 * | 1,2,6, 9-11, 16,25 | H 04 N 5/16<br>H 04 N 7/167 |
| Y | | 7,13, 21,29 | |
| A | | 3,8,12,14,15,17,20,22,23,26,30,33 | |
| | --- | | |
| Y | US-A-4 070 693 (SHUTTERLY)<br>* Column 2, line 18 - column 6, line 58; figures * | 7,13, 21,29 | **TECHNICAL FIELDS SEARCHED (Int Cl 4)**<br>H 04 N 5/00<br>H 04 N 7/00 |
| A | | 17,24, 26,32 | |
| | ----- | | |

The present search report has been drawn up for all claims

| Place of search | Date of completion of the search | Examiner |
|---|---|---|
| THE HAGUE | 17-12-1986 | HAZEL J.F. |

**CATEGORY OF CITED DOCUMENTS**

- X : particularly relevant if taken alone
- Y : particularly relevant if combined with another document of the same category
- A : technological background
- O : non-written disclosure
- P : intermediate document
- T : theory or principle underlying the invention
- E : earlier patent document, but published on, or after the filing date
- D : document cited in the application
- L : document cited for other reasons
- & : member of the same patent family, corresponding document

EPO Form 1503 03 82